# FASCICULE DE BREVET EUROPEEN

(11) **EP 3 830 403 B1**
(45) Date de publication et mention de la délivrance du brevet: **19.04.2023**
(21) Numéro de dépôt: 19765529.3
(22) Date de dépôt: 30.07.2019
(51) Int. Cl.: F02K 3/115, F01D 25/12, F02C 7/14, F28F 9/22, F28D 1/04

(54) **ÉCHANGEUR THERMIQUE POUR TURBOMACHINE ET PROCÉDÉ DE FABRICATION ASSOCIÉ**
WÄRMETAUSCHER FÜR TURBOMASCHINE UND ZUGEHÖRIGES HERSTELLUNGSVERFAHREN
HEAT EXCHANGER FOR TURBOMACHINE AND ASSOCIATED MANUFACTURING METHOD

(30) Priorité: 31.07.2018 FR 1857152
(43) Date de publication de la demande: 09.06.2021
(73) Titulaire: SAFRAN AIRCRAFT ENGINES, 75015 Paris (FR)
(72) Inventeur: GUILLOU, Lancelot, 77550 MOISSY-CRAMAYEL (FR); AUBERGER, Stéphane, Louis, Lucien, 77550 MOISSY-CRAMAYEL (FR)
(74) Mandataire: Ernest Gutmann - Yves Plasseraud S.A.S.
(86) Numéro de dépôt international: PCT/FR2019/051871
(87) Numéro de publication internationale: WO 2020/025895

(56) Documents cités:
- FR-A1- 3 060 057
- US-A1- 2015 000 865
- US-A1- 2015 135 726
- US-A1- 2016 348 548

## Description

### DOMAINE

La présente invention concerne un échangeur thermique et plus particulièrement le refroidissement de l'huile dans un moteur d'avion.

### CONTEXTE

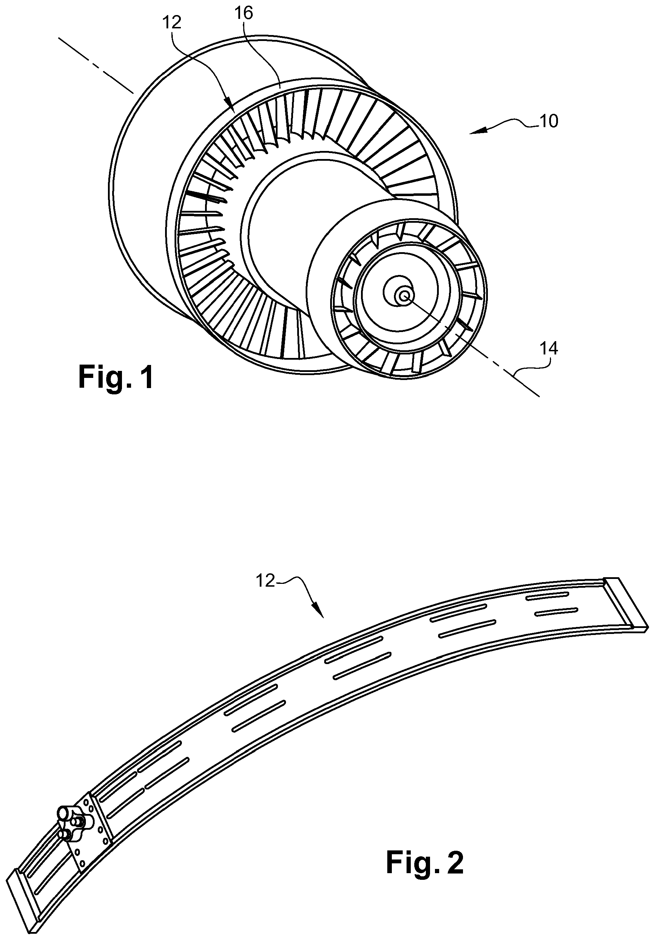

La figure 1 représente une turbomachine 10 à double flux qui comprend des pièces mobiles qui frottent contre d'autres pièces mobiles ou contre des pièces fixes, cette liaison est par exemple un palier. Pour ne pas se rompre à cause de l'échauffement dû aux frottements, les pièces sont arrosées d'huile qui permet d'une part de limiter (ou contenir) leur échauffement et, d'autre part, de les lubrifier pour faciliter le glissement des pièces les unes sur les autres.

L'huile circule dans un circuit pourvu d'échangeurs thermiques, notamment des échangeurs huile/air 12, comme représenté en figure 2, ayant une matrice, sous la forme d'une conduite sinueuse conformée de manière à réaliser un échange de chaleur, dans laquelle l'huile provenant desdites pièces est introduite puis refroidie avant d'être de nouveau injectée sur lesdites pièces. L'échangeur thermique 12 représenté en figure 2 est un échangeur thermique 12 annulaire qui est monté sur la face radialement interne ou externe (par rapport à l'axe longitudinal 14 de la turbomachine) d'une virole annulaire 16 délimitant radialement vers l'extérieur ou l'intérieur une veine annulaire d'écoulement d'un flux d'air secondaire.

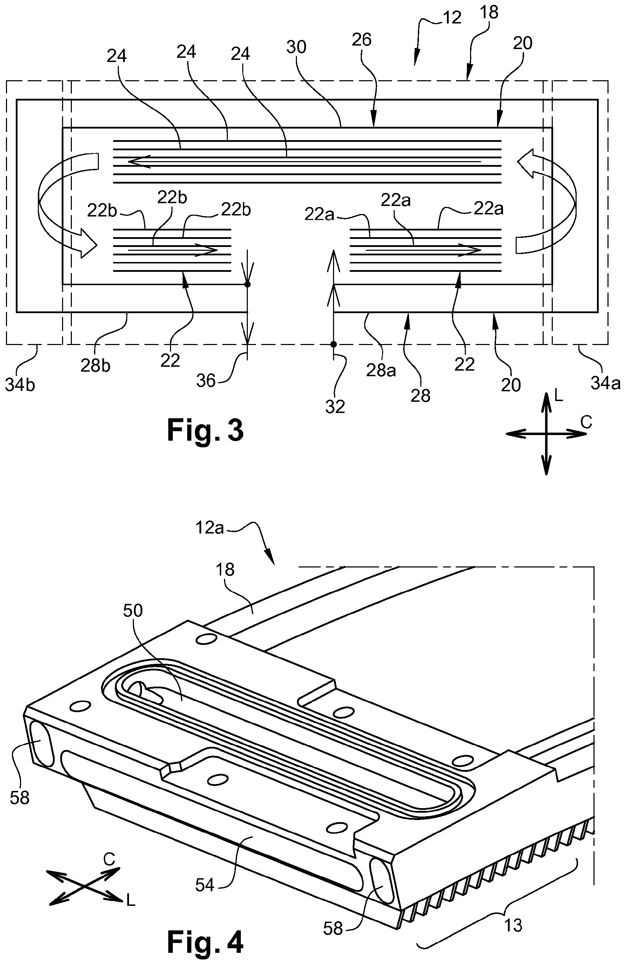

La figure 3 représente de manière schématique le principe de circulation d'un fluide à refroidir, en particulier de l'huile, dans l'échangeur de chaleur 12 comme représenté en figure 2. L'échangeur de chaleur 12 comprend une partie annulaire 18 comportant un premier circuit 20 formé de premier conduits 22 et de seconds conduits 24 pour la circulation d'huile à refroidir et un second circuit 26 formé d'un premier conduit 28 et d'un second conduit 30 pour la circulation d'huile de décongélation des premiers 22 et seconds 24 conduits du premier circuit 20. L'échangeur 12 est un échangeur annulaire qui s'étend autour de l'axe 14 de la turbomachine. Sur la figure 3 sont représentées la dimension longitudinale de l'échangeur 12 selon la direction L et la dimension circonférentielle de l'échangeur 12 selon la direction C.

Comme cela est visible, les premiers conduits 22 du premier circuit 20 comprennent des premières portions 22a qui s'étendent entre une entrée 32 de fluide et un premier organe 34a de liaison fluidique et des secondes portions 22b qui s'étendent entre un second organe 34b de liaison fluidique et une sortie 36 de fluide. Les seconds conduits 24 du premier circuit 20 s'étendent entre le premier organe 34a de liaison fluidique et le second organe 34b de liaison fluidique. De cette manière, l'huile s'écoule depuis l'entrée 32 de fluide, dans les premières portions 22a des premiers conduits 22, dans le premier organe 34a de liaison fluidique, dans les seconds conduits 24 du premier circuit 20, dans le second organe 34b de liaison fluidique, dans les secondes portions 22b des premiers conduits 22 puis vers la sortie 36 d'huile.

Le premier conduit 28 du second circuit 26 comprend une première portion 28a qui s'étend entre l'entrée 32 de fluide et le premier organe 34a de liaison fluidique et une seconde portion 28b qui s'étend entre le second organe 34b de liaison fluidique et la sortie 36 de fluide.

Le second conduit 30 du second circuit 26 s'étend entre le premier organe 34a de liaison fluidique et le second organe 34b de liaison fluidique. De cette manière, l'huile s'écoulent depuis l'entrée 32 de fluide, dans la première portion 28a du premier conduit 28, dans le premier organe 34a de liaison fluidique, dans le second conduit 30, dans le second organe 34b de liaison fluidique, dans la seconde portion 28b du premier conduit 28 du second circuit 26 puis vers la sortie d'huile 36. Ainsi conformé, l'huile du second circuit 26 peut permettre une décongélation du premier circuit 20 lorsque cela s'avère nécessaire.

Comme cela est visible, les organes 34a, 34b de liaison ainsi utilisés pour réaliser la liaison fluidique entre les premiers conduits 22, 28 et les seconds conduits 24, 30 du premier circuit 20 et du second circuit 26. Toutefois, ces pièces sont compliquées à réaliser puisqu'elles doivent comprendre des canaux de recirculation d'huile. De plus, du fait de l'indépendance structurelle de ces organes 34a, 34b de liaison, il est nécessaire de les fixer par soudure ou brasure à la partie annulaire, ce qui impose une vigilance particulière puisqu'il est impératif qu'aucune soudure ou brasure ne vienne obturer, même partiellement, l'écoulement d'huile dans le premier circuit 20 ou le second circuit 26. Il est dès lors nécessaire de mettre en place des opérations de contrôle qualité qui sont longues et coûteuses. Par ailleurs, la fixation de ces organes 34a, 34b de liaison les rend non démontables, ce qui n'est pas pratique lorsque l'on souhaite pouvoir inspecter simplement le premier circuit 20 et le second circuit 26. Enfin, étant donné l'emplacement de l'échangeur thermique 12 de la veine annulaire d'écoulement d'air, il est essentiel que sa dimension radiale soit limitée afin de ne pas avoir à modifier le diamètre de la virole, ce qui impacterait nécessairement les autres pièces qui y sont fixées.

Les documents US2015/135726 et US2016/348548 divulguent un échangeur de chaleur de l'art antérieur.

L'invention proposée a notamment pour but d'apporter une solution simple et efficace aux problèmes précités de la technique antérieure.

### RESUME DE L'INVENTION

Il est ainsi proposé un échangeur thermique annulaire d'axe longitudinal pour turbomachine, destiné par exemple à être supporté par une virole annulaire d'un carter de la turbomachine, comprenant une partie annulaire monobloc comprenant un premier circuit fluidique comportant au moins un premier conduit et au moins un second conduit s'étendant annulairement, caractérisé en ce que le premier conduit et le second conduit débouchent dans une première cavité formée à une première extrémité circonférentielle de ladite partie annulaire et en ce qu'il comprend des moyens d'étanchéité amovibles qui sont rapportés au niveau de ladite première extrémité et configurés de manière à permettre un écoulement de fluide depuis le second conduit, dans la première cavité puis dans le premier conduit.

Ainsi, la liaison fluidique au niveau d'une extrémité de l'échangeur thermique peut être réalisée directement à l'intérieur de la partie annulaire et non plus au moyen d'organes de liaison fluidique. En effet, il est ici important de noter que la cavité qui assure la communication fluidique entre le premier conduit et le second conduit du premier circuit est formée dans la partie annulaire qui est monobloc à la différence de la technique antérieure où la liaison fluidique est réalisée dans les organes de liaison fluidique fixés par soudure ou brasure.

Selon une autre caractéristique, la partie annulaire peut comprendre un second circuit fluidique comportant au moins un premier conduit et au moins un second conduit agencés de part et d'autre des premier conduit et second conduit du premier circuit dans une direction perpendiculaire à la direction longitudinale, et dans lequel premier conduit et le second conduit du second circuit débouchent dans une seconde cavité formée au niveau de la première extrémité circonférentielle de ladite partie annulaire, les moyens d'étanchéité étant également rapportés au niveau de ladite première extrémité de manière à permettre un écoulement de fluide depuis le second conduit du second circuit, dans la seconde cavité puis dans le premier conduit du second circuit.

La seconde cavité peut être formée radialement à l'extérieur de la première cavité.

La première cavité peut déboucher circonférentiellement au niveau de la première extrémité circonférentielle et les moyens d'étanchéité peuvent comprendre un premier organe d'étanchéité monté au débouché de ladite première cavité.

De même, la seconde cavité peut déboucher radialement au niveau de la première extrémité circonférentielle et les moyens d'étanchéité peuvent comprendre un second organe d'étanchéité monté au débouché de ladite seconde cavité.

L'invention est ainsi particulièrement intéressante lorsque la partie annulaire comprenant le premier circuit et le second circuit est réalisée par extrusion, les cavités sont ainsi réalisées après l'extrusion proprement dite et il suffit de réaliser un usinage subséquent pour réaliser les cavités de liaisons des premiers conduits avec les seconds conduits des premiers et seconds circuits. Ces cavités étant réalisées depuis l'extérieur d'une préforme extrudée de la partie annulaire, on les obture de manière appropriée pour maintenir les cavités de liaisons fluidiques entre les premiers et seconds conduits des premier et second circuits.

Le premier conduit et le second conduit du second circuit peuvent être obturés par des troisièmes organes d'étanchéité à leurs extrémités débouchant circonférentiellement au niveau de la première extrémité de la partie annulaire.

Egalement, le second organe peut présenter une forme en L dont une première partie est appliquée à étanchéité sur la face sur laquelle débouche les premiers et seconds conduits des premier et second circuits.

Ce second organe peut présenter une seconde partie appliquée sur la partie annulaire de manière à obturer radialement la seconde cavité. Le second organe est de préférence fixé de manière amovible sur la partie annulaire. Cette fixation peut être réalisée par vissage par exemple.

L'invention concerne également un procédé de fabrication de l'échangeur décrit ci-dessus, comprenant les étapes suivante :
a) obtenir par extrusion une préforme de la partie annulaire au moyen d'une filière conformée de manière à ce que la préforme comprennent le premier conduit et le second conduit du premier circuit,
b) réaliser une première cavité au niveau de la première extrémité circonférentielle de la partie annulaire,
c) rapporter les moyens d'étanchéité amovibles au niveau de ladite première extrémité de manière à permettre un écoulement de fluide depuis le second conduit, dans la première cavité puis dans le premier conduit.

Par ailleurs, le procédé peut être tel que la filière est conformée de manière à ce que la préforme comprennent le premier conduit et le second conduit du second circuit.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en perspective d'une partie d'un échangeur thermique annulaire montée dans la turbomachine de la figure 1 ;
- la figure 3 est une illustration schématique de l'échangeur de la figure 2 et de l'écoulement d'huile à l'intérieur de celui-ci ;
- la figure 4 est une vue schématique en perspective d'une première extrémité d'un échangeur de chaleur selon l'invention :
- les figures 5A et 5B sont des vues schématiques en perspective d'organes d'étanchéité montés sur ladite extrémité de l'échangeur de chaleur ;
- la figure 6 est une vue schématique en perspective de la première extrémité de l'échangeur avec un autre organe d'étanchéité monté sur ladite extrémité ;
- la figure 7 est une vue schématique en perspective avec éclatement de la première extrémité de l'échangeur ;
- la figure 8 est une vue schématique en coupe de ladite première extrémité de l'échangeur thermique, la circulation d'huile étant illustrée.

### DESCRIPTION DETAILLEE

On se réfère maintenant aux figures 4 à 6 qui représentent un échangeur de chaleur 12a selon l'invention. De manière similaire à ce qui a été décrit en référence à la figure 3, l'échangeur 12a comprend une portion annulaire 18 comportant également un premier circuit fluidique 37 d'huile comportant une pluralité de premiers conduits 38 et de seconds conduits 40 sensiblement parallèles les uns aux autres, les premiers conduits 38 comprenant des premières et secondes portions 38b. L'échangeur 12a comprend également un second circuit fluidique 42 de décongélation comportant un premier conduit 44 et un second conduit 46 parallèles, le premier conduit 44 comportant une première portion (non visible) et une seconde portion 44b.

Les premiers conduits 38, 44 et seconds conduits 40, 42 des premier et second circuits 37, 42 sont tout à fait similaires à ce qui a été décrit précédemment en référence à la figure 3 et diffèrent de ceux-ci uniquement par leur liaison fluidique les uns aux autres au niveau des extrémités circonférentielles de l'échangeur thermique. Egalement, ce qui sera décrit en référence à la première extrémité circonférentielle 13 de l'échangeur thermique est également valable pour la seconde extrémité circonférentielle opposée. Ainsi, la description ne sera effectuée et représentée qu'en relation avec la première extrémité 13 circonférentielle de l'échangeur 12a à l'aide de la seconde portion 44b du premier conduit 44 du premier circuit 37 et du second conduit 40 du premier circuit 37 ainsi qu'à l'aide de la seconde portion 44b du premier conduit 44 et du second conduit 46 du second circuit 42.

L'invention propose donc de réaliser une liaison fluidique des premiers conduits 38 et seconds conduits 40 du premier circuit 37 ainsi que la liaison fluidique du premier conduit 44 et du second conduit 46 du second circuit 42 sans avoir à utiliser un organe de liaison structurellement indépendant de la partie annulaire 18 de l'échangeur de chaleur.

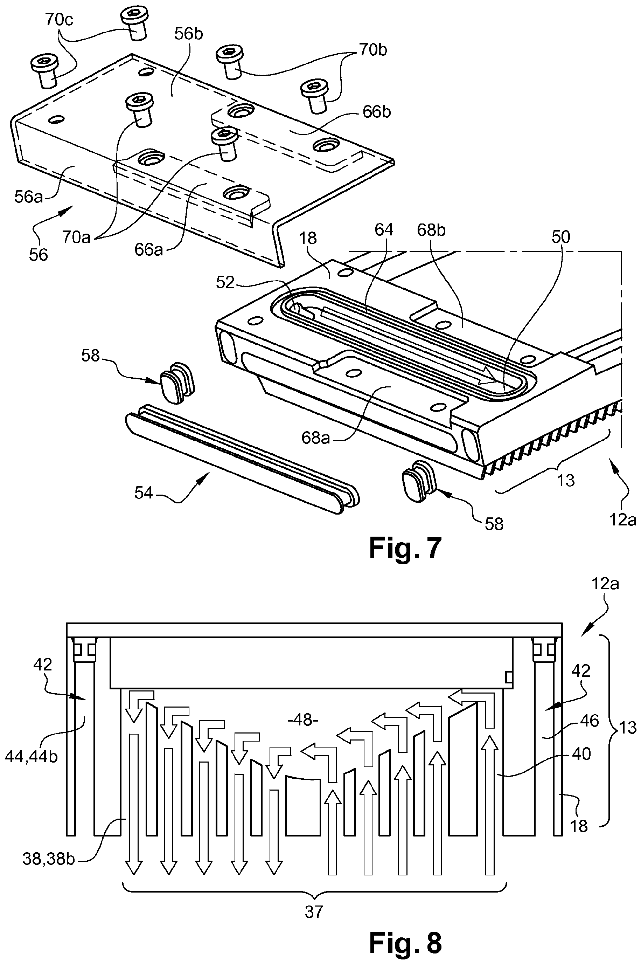

Afin de réaliser, l'échangeur 12a de chaleur, on procède tout d'abord à l'obtention d'une préforme de la partie annulaire 18 de l'échangeur 12a qui est dans un matériau bon conducteur de la chaleur tel qu'un alliage d'aluminium par exemple. Pour cela, on utilise une filière permettant l'obtention simultanément des premiers conduits 38 et seconds conduits 40 du premier circuit 37 et du premier conduit 44 et du second conduit 46 du second circuit 42. A l'issue de cette étape, les premiers conduits 38, 44 et seconds conduits 40, 46 des premier 37 et second 42 circuits s'étendent de la première extrémité 13 à la seconde extrémité de la partie annulaire 18 et débouchent en direction circonférentielle au niveau desdites extrémités. Dans une seconde étape ultérieure, on réalise une première cavité 48 et une seconde cavité 50 au niveau de la première extrémité 13 circonférentielle. La première cavité 48 débouche en direction circonférentielle et les secondes portions 38b des premiers conduits 38 et les seconds conduits 40 du premier circuit 37 débouchent dans la première cavité 48. La seconde cavité 50 débouche en direction radiale, plus particulièrement radialement vers l'extérieur. Cette seconde cavité 50 présente une forme allongée selon l'axe longitudinal L. Cette seconde cavité 50 est reliée à ses deux extrémités axiales à deux perçages 52 débouchant pour l'un dans la seconde portion 44b du premier conduit 44 du second circuit 42 et pour l'autre dans le second conduit 46 (figures 7 et 8).

Afin de réaliser de permettre une circulation d'huile dans chacun du premier circuit 37 et du second circuit 42, on ajoute des moyens d'étanchéité. Ces moyens d'étanchéité comprennent un premier organe 54 d'étanchéité, un deuxième organe 56 d'étanchéité et des troisièmes organes 58 d'étanchéité.

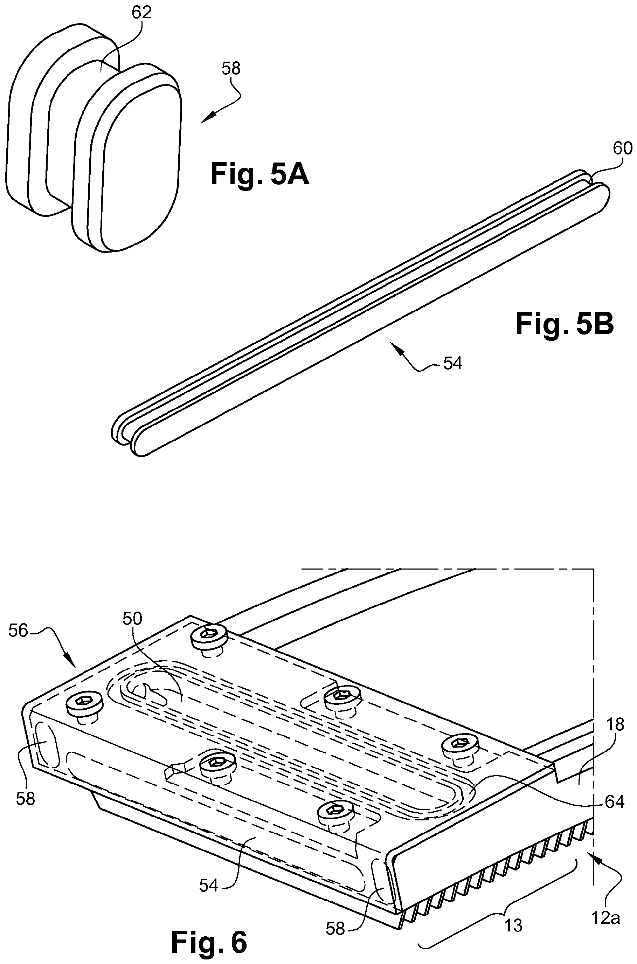

Le premier organe 54 d'étanchéité, visible en figure 5B, présente une forme allongée en direction longitudinale L et comprend une gorge annulaire 60 dans laquelle est monté un joint d'étanchéité (non représenté). Ce premier organe 54 d'étanchéité est monté dans la première cavité 48 et est dimensionné pour qu'une face de celui-ci viennent en vis-à-vis des débouchés des secondes portions 38b des premiers conduits 38 et des débouchés des seconds conduits 40 du premier circuit 37 mais sans les obturer, ceci afin de permettre un écoulement d'huile des seconds conduits 40 vers les secondes portions 38b des seconds conduits 38. Le joint d'étanchéité évite les fuites d'huile.

Les troisièmes organes 58 d'étanchéité sont insérés, au niveau de la première extrémité 13 de la partie annulaire 18, dans le débouché de la seconde portion 44b du premier conduit 44 du second circuit 42 et dans le débouché du second conduit 46 du second circuit 42. Chacun des troisièmes organes 58 comprend une gorge annulaire 62 dans laquelle est monté un joint d'étanchéité (non représenté) de manière similaire à ce qui a été décrit en référence au premier organe 54, la fonction étant identique.

Le deuxième organe 56 permet d'obturer le débouché de la seconde cavité 50, plus particulièrement de la recouvrir radialement. Une gorge annulaire 64 est formée autour de la périphérie du débouché de la seconde cavité 50. La gorge annulaire 64 est destinée à recevoir un joint d'étanchéité (non représenté). Le deuxième organe 56 présente une forme en L comportant une première partie 56a sensiblement plane destinée à venir s'appliquer en direction circonférentielle sur le premier organe 54 et les troisièmes organes 58. Il comprend également une seconde partie 56b présentant, sur sa face radialement interne (en direction de l'axe 14), un premier bossage 66a et un second bossage 66b agencés de part et d'autre de la seconde cavité 50 en direction circonférentielle lorsque le deuxième organe 56 est monté sur la partie annulaire 18. Le premier bossage 66a et le second bossage 66b coopèrent respectivement avec un premier évidement 68a et un second évidement 68b formés sur la face radialement externe de la partie annulaire 18. Le premier évidement 68a et le second évidement 68b sont formés en direction circonférentielle de part et d'autre de la seconde cavité 50. Ainsi, lorsque la seconde partie 56b du deuxième organe 56 est montée sur la première extrémité 13 de la partie annulaire 18, les bossages 66a, 66b assurent un blocage circonférentiel du deuxième organe 56 sur la partie annulaire 18. Des vis de fixation traversent la seconde partie et sont vissées dans la partie annulaire 18, des premières vis 70a traversant le premier bossage 66a, des secondes vis 70b traversant le second bossage 66b et des troisièmes vis 70c traversant une zone de la seconde partie 56b du second organe 56 distincte des premier 66a et second 66b bossages.

Selon la réalisation exposée précédemment, il est possible de démonter les moyens d'étanchéité, ce qui autorise un contrôle de l'échangeur au besoin. Par ailleurs, d'autres moyens de fixation amovibles peuvent être utilisés de sorte que l'invention n'est pas limitée à la seule utilisation de vis de fixation. On comprend que les moyens de fixation/liaison rigide amovibles devront permettre un montage et un démontage rapide.

Si l'on souhaite utiliser la même technique de liaison fluidique au niveau de la seconde extrémité de l'échangeur 12a que celle exposée ci-dessus au niveau de la première extrémité, il est ainsi possible après l'étape d'extrusion de former une première cavité 48 et une seconde cavité 50 au niveau de la seconde extrémité et d'ajouter des moyens d'étanchéité tels que ceux décrits ci-dessus.

Egalement, le ou les secondes cavités 50 pourraient déboucher radialement vers l'intérieur dans le cas où l'échangeur 12a serait monté sur une virole annulaire radialement interne de la turbomachine.

## Revendications

1. Echangeur thermique (12a) annulaire d'axe longitudinal (L) pour turbomachine, destiné par exemple à être supportée par une virole annulaire d'un carter de la turbomachine, comprenant une partie annulaire (18) monobloc comprenant un premier circuit fluidique (37) comportant au moins un premier conduit (38) et au moins un second conduit (40) s'étendant annulairement, **caractérisé en ce que** le premier conduit (38) et le second conduit (40) débouchent dans une première cavité (48) formée à une première extrémité (13) circonférentielle de ladite partie annulaire (18) et **en ce qu'**il comprend des moyens d'étanchéité amovibles qui sont rapportés au niveau de ladite première extrémité (13) et configurés de manière à permettre un écoulement de fluide depuis le second conduit (38), dans la première cavité (48) puis dans le premier conduit (40).

2. Echangeur selon la revendication 1, dans lequel il comprend un second circuit (42) fluidique comportant au moins un premier conduit (44) et au moins un second conduit (46) agencés de part et d'autre des premier conduit (38) et second conduit (40) du premier (37) circuit dans une direction perpendiculaire à la direction longitudinale (L), et dans lequel premier conduit (44) et le second conduit (46) du second circuit (42) débouchent dans une seconde cavité (50) formée au niveau de la première extrémité (13) circonférentielle de ladite partie annulaire (18), les moyens d'étanchéité étant également rapportés au niveau de ladite première extrémité (13) de manière à permettre un écoulement de fluide depuis le second conduit (46) du second circuit (42), dans la seconde cavité (50) puis dans le premier conduit (44) du second circuit (42).

3. Echangeur selon la revendication 1 ou 2, dans lequel la première cavité (48) débouche circonférentiellement au niveau de la première extrémité (13) circonférentielle et dans lequel les moyens d'étanchéité comprennent un premier organe d'étanchéité (54) monté au débouché de ladite première cavité (48).

4. Echangeur selon la revendication 2 ou la revendication 3 dépendant de la revendication 2, dans lequel la seconde cavité (50) débouche radialement au niveau de la première extrémité (13) circonférentielle et dans lequel les moyens d'étanchéité comprennent un second organe d'étanchéité (56) monté au débouché de ladite seconde cavité (50).

5. Echangeur selon l'une des revendications précédentes et la revendication 2, dans lequel le premier conduit (44) et le second conduit (46) du second circuit (42) sont obturés par des troisièmes organes (58) d'étanchéité à leurs extrémités débouchant circonférentiellement au niveau de la première extrémité (13) de la partie annulaire (18).

6. Echangeur selon la revendication 4 ou les revendications 4 et 5, dans lequel le second organe (56) présente une forme en L dont une première partie (56a) est appliquée à étanchéité sur la face sur laquelle débouche les premiers (38, 44) et seconds conduits (40, 46) des premier (37) et second (42) circuits.

7. Echangeur selon la revendication 6, dans lequel le second organe (56) présente une seconde partie (56b) appliquée sur la partie annulaire (18) de manière à obturer radialement la seconde cavité (50).

8. Echangeur selon la revendication 6 ou 7, dans lequel le second organe (56) est fixé de manière amovible sur la partie annulaire (18).

9. Echangeur selon la revendication 8, dans lequel le second organe (56) est fixé par vissage sur la partie annulaire (18).

10. Procédé de fabrication de l'échangeur selon l'une des revendications 1 à 9, dans lequel il comprend les étapes :
a) obtenir par extrusion une préforme de la partie annulaire (18) au moyen d'une filière conformée de manière à ce que la préforme comprennent le premier conduit (38) et le second conduit (40) du premier circuit (37),
b) réaliser une première cavité (48) au niveau de la première extrémité (13) circonférentielle de la partie annulaire (18),
c) rapporter les moyens d'étanchéité amovibles au niveau de ladite première extrémité (13) de manière à permettre un écoulement de fluide depuis le second conduit (40), dans la première cavité (48) puis dans le premier conduit (38).

## Patentansprüche

1. Ringförmiger Wärmetauscher (12a) mit einer Längsachse (L) für eine Turbomaschine, der beispielsweise dazu bestimmt ist, von einem ringförmigen Mantel eines Gehäuses der Turbomaschine abgestützt zu werden, enthaltend ein einstückig ausgeführtes, ringförmiges Teil (18), das einen ersten Strömungskreislauf (37) mit zumindest einer ersten Leitung (38) und zumindest einer zweiten Leitung (40), die sich ringförmig erstrecken, umfasst,
**dadurch gekennzeichnet, dass** die erste Leitung (38) und die zweite Leitung (40) in einen ersten Hohlraum (48) münden, der an einem ersten Umfangsende (13) des ringförmigen Teils (18) ausgebildet ist, und dass er abnehmbare Dichtungsmittel enthält, die im Bereich des ersten Endes (13) angesetzt und dazu ausgelegt sind, eine Fluidströmung von der zweiten Leitung (38) in den ersten Hohlraum (48) und dann in die erste Leitung (40) zu ermöglichen.

2. Wärmetauscher nach Anspruch 1,
wobei er einen zweiten Strömungskreislauf (42) enthält, der zumindest eine erste Leitung (44) und zumindest eine zweite Leitung (46) umfasst, die auf beiden Seiten der ersten Leitung (38) und der zweiten Leitung (40) des ersten Kreislaufs (37) in einer Richtung senkrecht zur Längsrichtung (L) angeordnet sind, und wobei die erste Leitung (44) und die zweite Leitung (46) des zweiten Kreislaufs (42) in einen zweiten Hohlraum (50) münden, der im Bereich des ersten Umfangsendes (13) des ringförmigen Teils (18) ausgebildet ist, wobei die Dichtungsmittel auch im Bereich des ersten Endes (13) so angesetzt sind, dass sie eine Fluidströmung von der zweiten Leitung (46) des zweiten Kreislaufs (42) in den zweiten Hohlraum (50) und dann in die erste Leitung (44) des zweiten Kreislaufs (42) ermöglichen.

3. Wärmetauscher nach Anspruch 1 oder 2,
wobei der erste Hohlraum (48) im Bereich des ersten Umfangsendes (13) in Umfangsrichtung mündet und wobei die Dichtungsmittel ein erstes Dichtungsorgan (54) umfassen, das an der Mündung des ersten Hohlraums (48) angebracht ist.

4. Wärmetauscher nach Anspruch 2 oder Anspruch 3 in Abhängigkeit von Anspruch 2,
wobei der zweite Hohlraum (50) radial im Bereich des ersten Umfangsendes (13) mündet und wobei die Dichtungsmittel ein zweites Dichtungsorgan (56) umfassen, das an der Mündung des zweiten Hohlraums (50) angebracht ist.

5. Wärmetauscher nach einem der vorhergehenden Ansprüche und nach Anspruch 2,
wobei die erste Leitung (44) und die zweite Leitung (46) des zweiten Kreislaufs (42) an ihren Enden, die in Umfangsrichtung im Bereich des ersten Endes (13) des ringförmigen Teils (18) münden, durch dritte Dichtungsorgane (58) verschlossen sind.

6. Wärmetauscher nach Anspruch 4 oder nach den Ansprüchen 4 und 5, wobei das zweite Organ (56) eine L-Form aufweist, von der ein erster Abschnitt (56a) abdichtend auf der Seite anliegt ist, auf der die ersten (38, 44) und zweiten Leitungen (40, 46) des ersten (37) und zweiten (42) Kreislaufs münden.

7. Wärmetauscher nach Anspruch 6,
wobei das zweite Organ (56) einen zweiten Abschnitt (56b) aufweist, der so an dem ringförmigen Teil (18) anliegt, dass er den zweiten Hohlraum (50) radial verschließt.

8. Wärmetauscher nach Anspruch 6 oder 7,
wobei das zweite Organ (56) lösbar an dem ringförmigen Teil (18) befestigt ist.

9. Wärmetauscher nach Anspruch 8,
wobei das zweite Organ (56) durch Verschrauben an dem ringförmigen Teil (18) befestigt ist.

10. Verfahren zur Herstellung des Wärmetauschers nach einem der Ansprüche 1 bis 9, wobei es die folgenden Schritte umfasst:
a) Erhalten einer Vorform des ringförmigen Teils (18) durch Extrusion mithilfe einer Düse, die so ausgeformt ist, dass die Vorform die erste Leitung (38) und die zweite Leitung (40) des ersten Kreislaufs (37) umfasst,
b) Herstellen eines ersten Hohlraums (48) im Bereich des erstes Umfangsendes (13) des ringförmigen Teils (18),
c) Ansetzen der abnehmbaren Dichtungsmittel im Bereich des ersten Endes (13) derart, dass eine Fluidströmung von der zweiten Leitung (40) in den ersten Hohlraum (48) und dann in die erste Leitung (38) möglich ist.

## Claims

1. An annular heat exchanger (12a) of longitudinal axis (L) for a turbomachine, intended for example to be supported by an annular shell of a casing of the turbomachine, comprising an annular part (18) in one piece comprising a first fluid circuit (37) comprising at least a first conduit (38) and at least a second conduit (40) extending annularly, **characterized in that** the first conduit (38) and the second conduit (40) open into a first cavity (48) formed at a circumferential first end (13) of said annular part (18) and **in that** it comprises removable sealing means which are attached to said first end (13) and configured so as to allow a flow of fluid from the second conduit (38), into the first cavity (48) and then into the first conduit (40).

2. An exchanger according to claim 1, in which it comprises a second fluidic circuit (42) comprising at least a first conduit (44) and at least a second conduit (46) arranged on either side of the first conduit (38) and second conduit (40) of the first circuit (37) in a direction perpendicular to the longitudinal direction (L), and wherein the first conduit (44) and the second conduit (46) of the second circuit (42) open into a second cavity (50) formed at the first circumferential end (13) of said annular part (18), the sealing means also being attached at said first end (13) so as to allow a flow of fluid from the second conduit (46) of the second circuit (42), in the second cavity (50) then in the first conduit (44) of the second circuit (42).

3. An exchanger according to claim 1 or 2, in which the first cavity (48) opens circumferentially at the level of the first circumferential end (13) and in which the sealing means comprise a first sealing member (54) mounted on the outlet of said first cavity (48).

4. An exchanger according to claim 2 or claim 3 dependent on claim 2, wherein the second cavity (50) opens radially at the first end (13) circumferential and wherein the sealing means comprise a second member d 'seal (56) mounted at the outlet of said second cavity (50).

5. An exchanger according to one of the preceding claims and claim 2, wherein the first conduit (44) and the second conduit (46) of the second circuit (42) are closed by third members (58) sealing their ends opening circumferentially at the first end (13) of the annular part (18).

6. An exchanger according to claim 4 or claims 4 and 5, wherein the second member (56) has an L-shape, a first part (56a) is applied as a seal on the face on which opens the first (38, 44) and second conduits (40, 46) of the first (37) and second (42) circuits.

7. An exchanger according to claim 6, in which the second member (56) has a second part (56b) applied to the annular part (18) so as to close off the second cavity (50).

8. An exchanger according to claim 6 or 7, wherein the second member (56) is removably attached to the annular part (18).

9. An exchanger according to claim 8, wherein the second member (56) is fixed by screwing on the annular part (18).

10. Method for manufacturing the exchanger according to one of claims 1 to 9, in which it comprises the steps:
a) obtaining by extrusion a preform of the annular part (18) by means of a die shaped so that the preform comprises the first conduit (38) and the second conduit (40) of the first circuit (37),
b) making a first cavity (48) at the level of the first circumferential end (13) of the annular part (18),
c) applying the removable sealing means at said first end (13) so as to allow a flow of fluid from the second conduit (40), into the first cavity (48) and then into the first conduit (38).
